(19)

**Europäisches Patentamt**
**European Patent Office**
**Office européen des brevets**

(11) **EP 4 230 531 B1**

(12) **EUROPEAN PATENT SPECIFICATION**

(45) Date of publication and mention
of the grant of the patent:
**13.08.2025 Bulletin 2025/33**

(21) Application number: **23154667.2**

(22) Date of filing: **02.02.2023**

(51) International Patent Classification (IPC):
*B64D 47/02* (2006.01)     *B60Q 1/24* (2006.01)
*F21S 8/00* (2006.01)     *F21V 21/15* (2006.01)
*F21V 21/30* (2006.01)     *G05D 1/00* (2024.01)
*F21V 21/14* (2006.01)     *F21W 107/30* (2018.01)

(52) Cooperative Patent Classification (CPC):
**B64D 47/02;** B60Q 1/245

(54) **SYSTEM AND METHOD FOR AUTOMATIC CONTROL OF SEARCHLIGHT ORIENTATION**

SYSTEM UND VERFAHREN ZUR AUTOMATISCHEN STEUERUNG DER AUSRICHTUNG VON
SUCHSCHEINWERFERN

SYSTÈME ET PROCÉDÉ DE COMMANDE AUTOMATIQUE D'ORIENTATION DE PROJECTEUR

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**

(30) Priority: **22.02.2022 IN 202211009303**
**06.04.2022 US 202217658230**

(43) Date of publication of application:
**23.08.2023 Bulletin 2023/34**

(73) Proprietor: **Honeywell International Inc.**
**Charlotte, NC 28202 (US)**

(72) Inventors:
• **DAS, Shouvik**
**Charlotte, 28202 (US)**
• **SAXENA, Sunit Kumar**
**Charlotte, 28202 (US)**

• **KULKARNI, Abhijit**
**Charlotte, 28202 (US)**
• **BRAHMBHATT, Kartik**
**Charlotte, 28202 (US)**
• **TYSON III, William**
**Charlotte, 28202 (US)**
• **GIFFEN, Craig**
**Charlotte, 28202 (US)**

(74) Representative: **Ingrassia, Fisher & Lorenz UK**
**Ltd.**
**Cambridge House**
**Henry Street**
**Bath BA1 1BT (GB)**

(56) References cited:
CA-C- 2 543 788          US-A1- 2013 261 849
US-A1- 2015 003 084

Note: Within nine months of the publication of the mention of the grant of the European patent in the European Patent
Bulletin, any person may give notice to the European Patent Office of opposition to that patent, in accordance with the
Implementing Regulations. Notice of opposition shall not be deemed to have been filed until the opposition fee has been
paid. (Art. 99(1) European Patent Convention).

## Description

CROSS-REFERENCE TO RELATED APPLICATION

This application claims priority to India Provisional Patent Application No. 202211009303, filed February 22, 2022.

TECHNICAL FIELD

The technical field generally relates to navigational aids, and more particularly relates to systems and methods for search and rescue light control for a rotorcraft.

BACKGROUND

Rotorcraft searchlights are illumination devices mounted under the belly or chin of a rotorcraft. A rotorcraft searchlight can facilitate search and rescue mission operations by illuminating a point of interest on the ground. Some searchlights are rigidly mounted whereby the rotorcraft must maneuver to re-orient the light on ground. Other current searchlight configurations provide azimuth and tilt control to maneuver the direction/location of the searchlight beam of light on the ground, independent of the rotorcraft movement.

The searchlight control is usually provided as azimuth/tilt commands from the pilot or other crew member using a Hat Switch and in a general use case manually operated by the pilot while flying the rotorcraft. There are situations when the pilot needs to multitask between the rotorcraft control as well as precisely tracking the point of interest by constantly compensating the searchlight orientation due the vehicular motion. This might sometimes result in loss of target or loss of situational awareness.

During a Search and Rescue (SAR) mission, the onus is generally on the pilot to control the searchlight beam of light and/or fly the rotorcraft to follow a predefined SAR pattern. These missions are dynamic and can be very technically difficult. For example, the rotorcraft may have to fly close to the terrain, in high crosswinds, etc. Maintaining the rotorcraft attitude while controlling the searchlight beam of light is cognitively demanding.

Hence, it is desirable to provide systems and methods for automatically controlling the orientation of a searchlight. Furthermore, other desirable features and characteristics of the present invention will become apparent from the subsequent detailed description and the appended claims, taken in conjunction with the accompanying drawings and the foregoing technical field and background.

US 2015/0003084 A1 describes a light fixture which can be controlled using one or motors used to control the tilt, pan and the focus of light. A controller can control the motors. The controller can communicate data with a lighting console and a computing device. The computing device can send a control signal to the motor controller to, in turn, affect the light fixture. The lighting console can also exchange data with the computing device, and can also be used to receive inputs from the user. A tracking system is in communication with the computing device. The tracking system can track the location of a beacon. The beacon can be used to mark the location of a specified target, for example, in three-dimensional (3D) space. The beacon can be used to mark the location of a specified target, for example, in 3D space. In other words, the location of the beacon, which is tracked using the tracking system, can be the specified target. The tracking system tracks the beacon and outputs the coordinates for the target location. The system then attempts to move the light fixture to point the spotlight onto the target location. An inverse kinematic model of the light fixture is provided. An input is provided to the inverse kinematic model, and the inverse kinematic model is used to compute a control signal for the light fixture. The input represents the desired location of the light and can be represented by coordinates x,y,z. More generally, the input represents the desired location at which the fixture is to point.

SUMMARY

This summary is provided to describe select concepts in a simplified form that are further described in the Detailed Description.

Aspects and preferred embodiments are set out in the appended claims. Disclosed herein is a searchlight system for an aerial vehicle. The searchlight system includes a searchlight having a light head and a plurality of searchlight actuators for adjusting an orientation of the searchlight and an electronics control unit for providing azimuth and tilt commands for the searchlight actuators. The electronics control unit includes a controller configured to: obtain a target range, using a ranging sensor, to a point of interest (POI) at a target that is at ground or at an elevation above ground; determine a searchlight position and attitude; calculate a three dimensional position (3D target position) at the POI using searchlight azimuth and tilt actuator angles, the target range, and the searchlight position and attitude, the 3D target position being a position at which the searchlight's light head should continue to point despite changes in movement or orientation of the aerial vehicle; calculate a desired light head orientation including azimuth angle and tilt angle to point the light head at the target through inverting a kinematic relationship between the aerial vehicle and the light head; calculate compensatory actuator angles for a plurality of searchlight actuators to achieve the desired searchlight orientation based on error measurements calculated from a current orientation; and command the plurality of searchlight actuators to the compensatory actuator angles, wherein an actual searchlight orientation is controlled to illuminate the target.

A computer-implemented method for controlling an orientation of a searchlight for an aerial vehicle is disclosed. The method includes: obtaining a target range, using a ranging sensor, to a point of interest (POI) at a target that is at ground or at an elevation above ground; determining a searchlight position and attitude; calculating a three dimensional position (3D target position) at the POI using searchlight azimuth and tilt actuator angles, the target range, and the searchlight position and attitude, the 3D target position being a position at which the searchlight's light head should continue to point despite changes in movement or orientation of the aerial vehicle; calculating a desired searchlight orientation including azimuth angle and tilt angle to point the light head at the target through inverting a kinematic relationship between the aerial vehicle and the light head; calculating compensatory actuator angles for a plurality of searchlight actuators to achieve the desired searchlight orientation based on error measurements calculated from a current orientation; and commanding the plurality of searchlight actuators to the compensatory actuator angles, wherein an actual searchlight orientation is controlled to illuminate the target.

Furthermore, other desirable features and characteristics will become apparent from the subsequent detailed description and the appended claims, taken in conjunction with the accompanying drawings and the preceding background.

## BRIEF DESCRIPTION OF THE DRAWINGS

Embodiments of the subject matter will hereinafter be described in conjunction with the following drawing figures, wherein like numerals denote like elements, and wherein:

FIG. 1 is a block diagram depicting an example search and rescue (SAR) system in a mobile platform, in accordance with some embodiments;

FIGS. 2A, 2B, 2C, 2D, and 2E are diagrams depicting various angular configurations of a light head of a search light assembly, in accordance with some embodiments;

FIG. 3 is a process flow chart depicting an example process for tracking a target at a POI, in accordance with some embodiments;

FIG. 4 is a block diagram depicting an example motor control law, in accordance with some embodiments; and

FIG. 5 is a process flow chart depicting an example process for controlling an orientation of a searchlight on an aerial vehicle, in accordance with some embodiments.

## DETAILED DESCRIPTION

The following detailed description is merely exemplary in nature and is not intended to limit the application and uses. Furthermore, there is no intention to be bound by any expressed or implied theory presented in the preceding technical field, background, summary, or the following detailed description. As used herein, the term "module" refers to any hardware, software, firmware, electronic control component, processing logic, and/or processor device, individually or in any combination, including without limitation: application specific integrated circuit (ASIC), a field-programmable gate-array (FPGA), an electronic circuit, a processor (shared, dedicated, or group) and memory that executes one or more software or firmware programs, a combinational logic circuit, and/or other suitable components that provide the described functionality.

Embodiments of the present disclosure may be described herein in terms of functional and/or logical components and various processing steps. It should be appreciated that such functional and/or logical components may be realized by any number of hardware, software, and/or firmware components configured to perform the specified functions. For example, an embodiment of the present disclosure may employ various integrated circuit components, e.g., memory elements, digital signal processing elements, logic elements, look-up tables, or the like, which may carry out a variety of functions under the control of one or more microprocessors or other control devices. In addition, those skilled in the art will appreciate that embodiments of the present disclosure may be practiced in conjunction with any number of systems, and that the systems described herein is merely exemplary embodiments of the present disclosure.

For the sake of brevity, conventional techniques related to signal processing, data transmission, signaling, control, and other functional aspects of the systems (and the individual operating components of the systems) may not be described in detail herein. Furthermore, the connecting lines shown in the various figures contained herein are intended to represent example functional relationships and/or physical couplings between the various elements. It should be noted that many alternative or additional functional relationships or physical connections may be present in an embodiment of the present disclosure.

The subject matter described herein discloses apparatus, systems, techniques, and articles for a control mechanism for a searchlight, wherein built-in intelligence in the searchlight will allow the searchlight once it is aimed at a point of interest (POI) to compensate for vehicular motions and continue to illuminate the POI without the need of a searchlight operator to adjust an azimuth and/or tilt angle, for example, via an azimuth and/or tilt command from the hat switch. The apparatus, systems, techniques, and articles provided herein can provide an operator with hands-free control of searchlight orientation without having to compensate for the rotorcraft motion to continue to illuminate a location. The apparatus, systems, techniques, and articles provided herein can allow the operator to point to and track targets irrespective of the target's relative height from the searchlight.

The apparatus, systems, techniques, and articles provided herein can also be used to upgrade current searchlights to provide features like position lock, geostabilization, and Cartesian Control with no blind spots. The apparatus, systems, techniques, and articles provided herein can provide a searchlight which, unlike current searchlights, has inputs beyond the hat switch and power commands. The apparatus, systems, techniques, and articles provided herein utilize inputs from external sensors such as an inertial measurement unit (IMU) and Joint Angle Sensors.

Provided are an apparatus, systems, techniques, and articles for calculating the orientation of a searchlight. The apparatus, systems, techniques, and articles provided herein can employ a design wherein azimuth and tilt axis are not coincidental. The apparatus, systems, techniques, and articles provided herein can employ Homogenous transform matrices $\mathbb{R}^{4X4}$ which also account for translations (alongside rotations). The apparatus, systems, techniques, and articles provided herein can use a kinematic relationship to calculate joint angles synthesized from the orientation of the searchlight. The apparatus, systems, techniques, and articles provided herein can use Inverse Kinematics to calculate joint angles from the light head angle wherein the value of the light head angle and joint angles are different.

The apparatus, systems, techniques, and articles provided herein do not rely on the measurement of height of the searchlight from the ground or sea level. The apparatus, systems, techniques, and articles provided herein directly measures the range of a target and does not have a constraint that the target has to be at the sealground level from where the height of the searchlight is measured. With the apparatus, systems, techniques, and articles provided herein the target can be at any elevation.

The apparatus, systems, techniques, and articles provided herein do not calculate target position using a flat-earth model, which has a limitation of the searchlight height having to be measured from the same plain on which the target exists. The apparatus, systems, techniques, and articles provided herein use direct range measurement to the target allowing the target to be arbitrarily placed at any elevation, thereby allowing positioning and locking the searchlight to any target possible with exception to features which create occlusion to the light beam.

The apparatus, systems, techniques, and articles provided herein can utilize an Inverse Kinematics technique using Quaternions for trajectory planning which alleviates an algorithm applying the technique from mathematical singularity issues that could occur in algorithms that use a design where azimuth and tilt axis are considered to coincide and that rely on "Euler Angles" based calculations which may have singularity limitations.

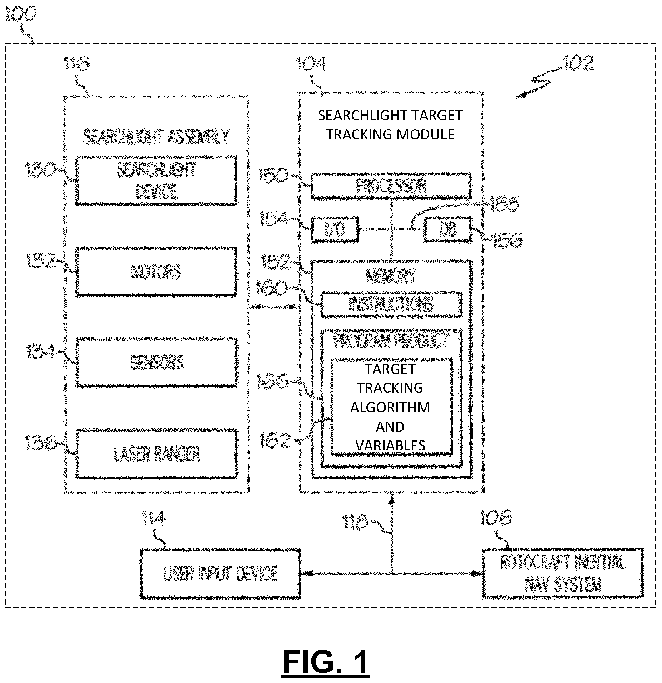

FIG. 1 is a block diagram depicting an example search and rescue (SAR) system 102 in a mobile platform 100. The example SAR system 102 (also referred to herein as "system" 102) is generally associated with a mobile platform 100. In various embodiments, the mobile platform 100 is a rotorcraft, and is referred to as rotorcraft 100. The SAR system 102 embodies a searchlight (SL) target tracking module 104. In some embodiments, the SL target tracking module 104 may be integrated within a preexisting mobile platform management system, avionics system, cockpit display system (CDS), flight controls system (FCS), or rotorcraft flight management system (FMS). Although the SL target tracking module 104 is shown as an independent functional block, onboard the rotorcraft 100, in other embodiments, it may exist in an electronic flight bag (EFB) or portable electronic device (PED), such as a tablet, cellular phone, or the like. In embodiments in which the SL target tracking module is within an EFB or a PED, the display system and a user input device 114 may also be part of the EFB or PED. The SL target tracking module 104 may be operationally coupled to any combination of the following rotorcraft systems: a communication system and fabric 118; a rotorcraft inertial navigation system 106; the user input device 114; a searchlight assembly 116; and other rotorcraft systems.

The example searchlight assembly 116 comprises a searchlight (also referred to herein as "SL," and as a searchlight device 130). The SL 130 emits a beam of light from a portion called a light head; the beam of light illuminates a spot or object on which the beam of light impinges. The example searchlight assembly 116 also comprises actuators (such as motors 132) for controlling the orientation of the searchlight device 130 (as used herein, the orientation of the SL 130 refers to the orientation of the SL light head with respect to earth), sensors 134 and a laser ranger 136. In an embodiment, the orientation is measured in Euler angles. In operation, the SL 130 may have two control angles: Pan (Azimuth) and Tilt (Elevation). These control angles can be measured, for example, using encoders in each control joint. By mounting the searchlight assembly 116, and hence the SL 130, to the rotorcraft 100, a fixed relationship between the SL light head and the rotorcraft's inertial frame can provide homogenous transformation of orientation values between the rotorcraft 100 and the SL 130. Using these two measured angular control angles, one can arrive at the searchlight orientation with respect to earth. In other embodiments, the searchlight assembly 116 is equipped with an inertial sensor, among sensors 134, from which the orientation with respect to earth may be obtained.

The sensors 134 detect orientation and configuration status of the searchlight device 130 and convert this status information into electrical signals for processing. The laser ranger 136 is configured to determine a distance from the SL 130 to an illuminated spot, the distance being referred to herein referred as a slant range, or simply "range." As a functional block, the searchlight assembly 116 is configured to determine and provide an actual SL orientation and an actual SL range to a location referred to as a point of interest (POI).

In some embodiments, real-time rotorcraft state data is generated by the rotorcraft inertial navigation system 106. Real-time rotorcraft state data may include any of an instantaneous location (e.g., the latitude, longitude, orientation), an instantaneous heading (i.e., the direction the rotorcraft is traveling in relative to some reference), a flight path angle, a vertical speed, a ground speed, an instantaneous altitude (or height above ground level), and a current phase of flight of the rotorcraft 100. As used herein, "real-time" is interchangeable with current and instantaneous. The rotorcraft inertial navigation system 106 may be realized as including a satellite navigation system (GNSS), inertial reference system (IRS), or a radiobased navigation system (e.g., VHF omni-directional radio range (VOR) or long-range aid to navigation (LORAN)), and may include one or more navigational radios or other sensors suitably configured to support operation of the FMS, as will be appreciated in the art. In various embodiments, the data referred to herein as the real-time rotorcraft state data may be referred to as navigation data. The real-time rotorcraft state data is made available, generally by way of the communication system and fabric 118, so other components, such as the SL target tracking module 104 and a display system, may further process and/or handle the rotorcraft state data.

In various embodiments, the communications system and fabric 118 is configured to support instantaneous (i.e., real time or current) communications between on-board systems, the SL target tracking module 104, and one or more external data source(s). The communications system and fabric 118 may incorporate one or more transmitters, receivers, and the supporting communications hardware and software required for components of the system 102 to communicate as described herein. In various embodiments, the communications system and fabric 118 may have additional communications not directly relied upon herein, such as bidirectional pilot-to-ATC (air traffic control) communications via a datalink, and any other suitable radio communication system that supports communications between the rotorcraft 100 and various external source(s).

The user input device 114 and the SL target tracking module 104 are cooperatively configured to allow a user (e.g., a pilot, co-pilot, or other crew member) to interact with display devices in a display system and/or other elements of the system 102. Depending on the embodiment, the user input device 114 may be realized as a cursor control device (CCD), keypad, touchpad, keyboard, mouse, touch panel (or touchscreen), joystick, knob, line select key, voice controller, gesture controller, or another suitable device adapted to receive input from a user. When the user input device 114 is configured as a touchpad or touchscreen, it may be integrated with the display system. As used herein, the user input device 114 may be used by a pilot to communicate with external sources, to modify or upload the program product 166, etc. In various embodiments, the display system and user input device 114 are onboard the rotorcraft 100 and are also operationally coupled to the communication system and fabric 118. In some embodiments, the SL target tracking module 104, user input device 114, and display system are configured as a control display unit (CDU).

In various embodiments, the SL target tracking module 104, alone, or as part of a central management computer (CMC) or a flight management system (FMS), draws upon data and information from the rotorcraft inertial navigation system 106 and searchlight assembly 116 to control the orientation of the light head. The SL target tracking module 104 is configured to obtain a target range, using a ranging sensor (e.g., laser ranger 136), to a POI at a target that is at ground or at an elevation above ground; determine a searchlight position and attitude; calculate a three dimensional position (3D target position) at the POI using searchlight azimuth and tilt actuator angles, the target range, and the searchlight position and attitude, while the SL light head continues to point at the 3D target position despite changes in movement or orientation of the mobile platform 100; calculate a desired SL orientation including azimuth (AZ) angle and tilt angle to point the SL light head at the target through inverting a kinematic relationship between the mobile platform 100 and the SL 130; calculate compensatory actuator angles for a plurality of SL actuators (e.g., motors 132) to achieve the desired SL orientation based on error measurements calculated from a current orientation; and command the plurality of SL actuators to the compensatory actuator angles, wherein an actual SL orientation is controlled to illuminate the target.

Accordingly, in FIG. 1, an embodiment of the SL target tracking module 104 is depicted as a processing component such as a controller. The processing component comprises at least one processor 150 and a computer-readable storage device or media (such as memory 152) encoded with programming instructions for configuring the processing component. The processor 150 may comprise any type of processor or multiple processors, any custom-made or commercially available processor, a central processing unit (CPU), a graphics processing unit (GPU), an application specific integrated circuit (ASIC), a field programmable gate array (FPGA), an auxiliary processor among several processors associated with the processing component, a semiconductor-based microprocessor (in the form of a microchip or chip set), any combination thereof, or generally any device for executing instructions to carry out the described operations, tasks, and functions by manipulating electrical signals representing data bits at memory locations in system memory, as well as other processing of signals.

The computer readable storage device or media (e.g., memory 152) may include volatile and nonvolatile storage in read-only memory (ROM), random-access memory (RAM), and keep-alive memory (KAM), for example. KAM is a persistent or non-volatile memory that may be used to store various operating variables while the processor is powered down. The computer-readable storage device or media may be implemented using any of a number of known memory devices such as PROMs (programmable read-only memory), EPROMs (electrically PROM), EEPROMs (electrically erasable PROM), flash memory, or any other electric, magnetic, optical, or combination memory devices capable of storing data, some of which represent executable programming instructions, used by the processing component. The memory 152 may be located on and/or co-located on the same computer chip as the processor 150. Generally, the memory 152 maintains data bits and may be utilized by the processor 150 as storage and/or a scratch pad during operation. Specifically, the memory 152 stores instructions and applications 160. Information in the memory 152 may be organized and/or imported from an external source during an initialization step of a process; it may also be programmed via a user input device 114. During operation, the processor 150 loads and executes one or more programs, algorithms and rules embodied as instructions and applications 160 contained within the memory 152 and, as such, controls the general operation of the SL target tracking module 104.

The novel program 162 includes rules and instructions that, when executed, convert the controller (e.g., processor 150/memory 152) configuration into the SL target tracking module 104, which is a novel SAR target tracking SL target tracking module that performs the functions, techniques, and processing tasks associated with target tracking for the SAR system 102. The novel program 162 directs the processing of searchlight assembly data with real time navigation data to determine differences/deviations between position, orientation and slant range between the intended values and actual values, as described hereinbelow. Novel program 162 and associated stored variables 164 may be stored in a functional form on computer readable media, for example, as depicted, in memory 152. While the depicted exemplary embodiment of the SL target tracking module 104 is described in the context of a fully functioning computer system, those skilled in the art will recognize that the mechanisms of the present disclosure are capable of being distributed as a program product 166.

As a program product 166, one or more types of non-transitory computer-readable signal bearing media may be used to store and distribute the program 162, such as a non-transitory computer readable medium bearing the program 162 and containing therein additional computer instructions for causing a computer processor (such as the processor 150) to load and execute the program 162. Such a program product 166 may take a variety of forms, and the present disclosure applies equally regardless of the type of computer-readable signal bearing media used to carry out the distribution. Examples of signal bearing media include recordable media such as floppy disks, hard drives, memory cards and optical disks, and transmission media such as digital and analog communication links. It will be appreciated that cloud-based storage and/or other techniques may also be utilized as memory 152 and as program product time-based viewing of clearance requests in certain embodiments.

In various embodiments, the controller (e.g., processor 150/memory 152) configuration of the SL target tracking module 104 may be communicatively coupled (via a bus 155) to an input/output (I/O) interface 154, and a database 156. The bus 155 serves to transmit programs, data, status and other information or signals between the various components of the SL target tracking module 104. The bus 155 can be any suitable physical or logical means of connecting computer systems and components. This includes, but is not limited to, direct hard-wired connections, fiber optics, infrared and wireless bus technologies.

The I/O interface 154 enables intra SL target tracking module 104 communication, as well as communications between the SL target tracking module 104 and other system 102 components, and between the SL target tracking module 104 and the external data sources via the communication system and fabric 118. The I/O interface 154 may include one or more network interfaces and can be implemented using any suitable method and apparatus. In various embodiments, the I/O interface 154 is configured to support communication from an external system driver and/or another computer system. In one embodiment, the I/O interface 154 is integrated with the communication system and fabric 118 and obtains data from external data source(s) directly. Also, in various embodiments, the I/O interface 154 may support communication with technicians, and/or one or more storage interfaces for direct connection to storage apparatuses, such as the database 156. In some embodiments, the database 156 is part of the memory 152. In various embodiments, the database 156 is integrated, either within the SL target tracking module 104 or external to it.

The SL 130 has a plurality of joints that allow the orientation of the SL 130 to be adjusted to track a target. A Kinematic relationship between each of the joints to the light head is pre-established using transforms. These transforms are called Homogenous Transforms which have both rotational and translational quantities. The Inverse of the Kinematic relationship is an Inverse Kinematic (IK) relationship.

Described herein is one embodiment of a searchlight with 2-degrees of freedom (azimuth and tilt) that utilizes IK based control. The apparatus, systems, techniques, and articles described herein may also be scaled to multi degree of freedom searchlight systems.

The Searchlight control of the orientation of the SL light head exercised by the SL target tracking module 104 involves understanding the coordinate space in which the SL operates. The coordinate space is chiefly described in two categories - joint space and task space. The joint space refers to the coordinate system constituted for each joint (in this example the azimuth and tilt joints). Each joint has its local coordinate system by which the position of each joint is determined. When an angular position of a joint is quantified, the angular position is quantified from an initial condition referenced in the same joint space.

The task space refers to the coordinate space with which the end-effector (in this case the light head) is positioned. The task space is an externally referenced (and anchored) coordinate system that helps determine the relationship between the light head and the world. The position of the light head is determined using north-east-down (NED) coordinates and Euler Angles.

The searchlight is a serial manipulator and kinematic equations that apply to it are like that of a robotic arm. The end-effector of a robotic arm is the piece that works with the job and is positioned in World Frame (in Task Space) by the virtue of changing the Joint Angles (in Joint Space). The rigid body transformation between the Joint Space and Task Space is represented using Homogenous Transforms. The Joint Space to Task Space reveals the position of the end effector and this is referred to as Forward Kinematics. In the case of Position Lock, the required position and orientation of the end-effector is known in Task Space. To position it there the Joint Angles, need to be changed. To find the magnitude of change, a Task Space to Joint space relationship is established using Inverse Kinematics. Every computational frame, IK is used to compute the joint angles based on the tracking error and hence it is a zero-order function which does not depend on a past value.

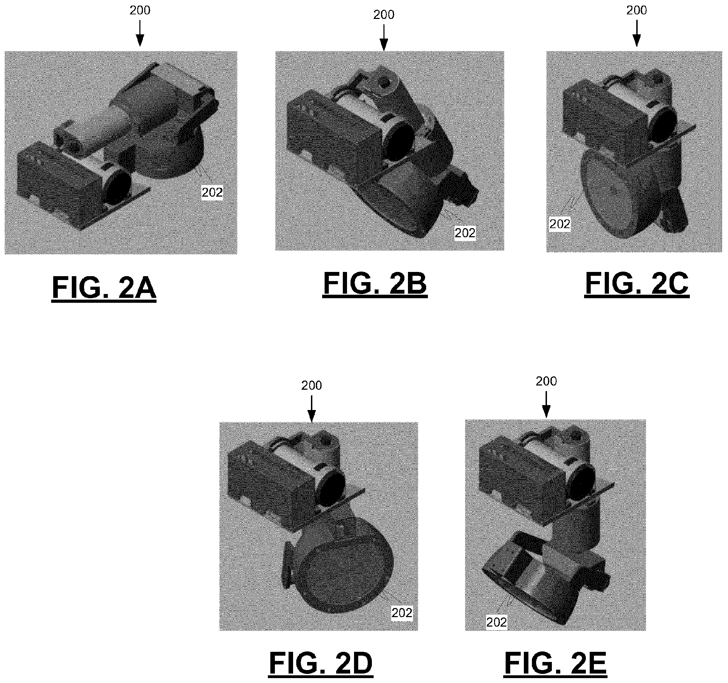

FIGS. 2A, 2B, 2C, 2D, and 2E are diagrams depicting various angular configurations of a light head 202 of a search light assembly 200. FIG. 2A depicts the search light assembly 200 in a retracted state. FIG. 2B depicts the search light assembly 200 extending from the retracted state. FIG. 2C depicts the search light assembly 200 in an extended state with the light head 202 at a 0° azimuth angle and a 90° tilt angle. FIG. 2D depicts the search light assembly 200 in an extended state with the light head 202 at a -45° azimuth angle and a 90° tilt angle. FIG. 2E depicts the search light assembly 200 in an extended state with the light head 202 at a 0° azimuth angle and a 45° tilt angle. By controlling the tilt and azimuth angles, the light head 202 may be directed in multiple directions to illuminate a target while a mobile vessel containing the SL changes locations.

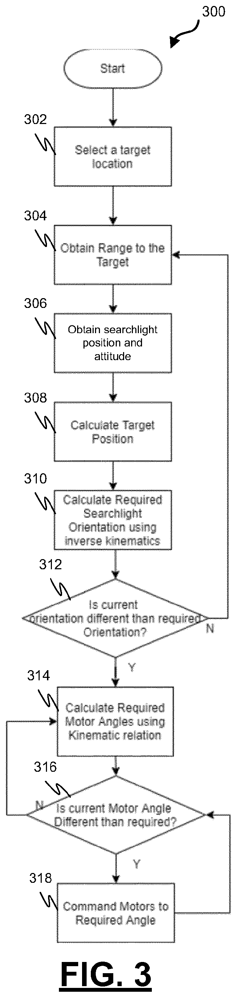

FIG. 3 is a process flow chart depicting an example process 300 in a searchlight target tracking module for tracking a target at a POI. The order of operation within the process 300 is not limited to the sequential execution as illustrated in the figure but may be performed in one or more varying orders as applicable and in accordance with the present disclosure.

The example searchlight target tracking module includes a position lock feature and a stabilization feature that work simultaneously to compensate for helicopter movement and attitude changes to maintain the location of a beam of light on a target. The example searchlight target tracking module may be hosted within searchlight electronics or may be an external unit that feeds inputs to the searchlight in the form of azimuth and tilt commands. An external unit embodiment can allow a legacy searchlight to be converted into a smart searchlight system that automatically tracks a target.

The example process 300 includes selecting a target location (operation 302). A searchlight operator may select a spot as a Point of Interest (POI). The POI could be at any elevation from the ground, even on features like mountain slopes, walls of building, rooftops, and others. The selected target can be provided as a first input to the searchlight system.

The example process 300 includes obtaining target range (operation 304). The target range is directly measured using a ranging sensor (e.g., laser ranger 136) that allows the searchlight system to know the exact distance to the target from the light head of the searchlight.

The example process 300 includes obtaining the searchlight position and attitude (operation 306). The vehicle could be any rotorcraft or other mobile systems. The searchlight's position and attitude are determined based on the position and attitude of the vehicle based on a kinematic relationship between the vehicle and the searchlight.

The example process 300 includes calculating a target position (operation 308). Using the searchlight's position, attitude and range to the target, the target position is determined in three dimensions. This position will be tracked by the searchlight system despite changes in movement or orientation of the vehicle.

The example process 300 includes calculating a required searchlight orientation (operation 310). A required searchlight orientation to continue to illuminate the target is calculated by inverting the kinematic relationship between the vehicle and the searchlight that is mentioned with respect to operation 306. The respective angles of each degree of freedom of the searchlight are calculated.

The example process 300 includes determining whether the current orientation is different from the required orientation (decision 312). If the current orientation is not different from the required orientation (no at decision 312) operations 304 through 312 are repeated. Operations 304 through 312 run periodically to provide continuous compensation for any change in vehicle position and attitude thereby enabling position lock and stabilization features compensating for the change in orientation and position of the vehicle.

If the current orientation is different from the required orientation (yes at decision 312), then the example process 300 includes calculating required motor angles (operation 314). Using the required orientation, an error measurement is calculated from the current orientation which is then used to generate the compensatory motor angles that will close the error. In this example the motors are the actuators that will close the error.

The example process 300 includes determining whether the current motor angle is different from the required motor angle (decision 316). If the current motor angle is not different from the required motor angle (no at decision 316), then operation 314 is repeated.

If the current motor angle is different from the required motor angle (yes at decision 316), then the example process 300 includes commanding the motor to required angles (operation 318). The motor control loop continues to command the motors with a feasible control regime that closes the error between the current and required motor angles. It could be any standard motor control law selected to match the bandwidth and performance of the system.

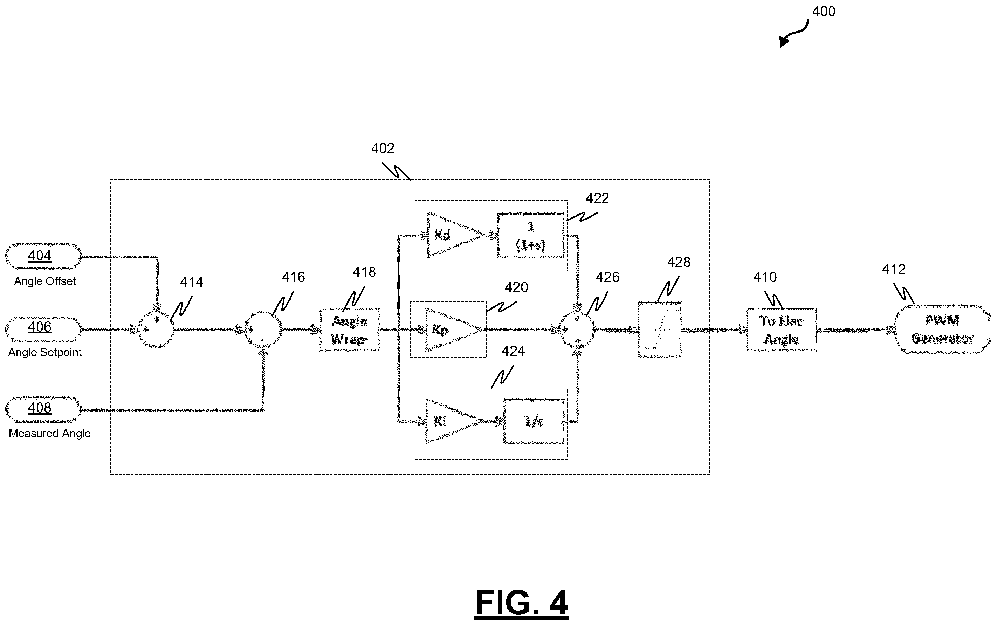

FIG. 4 is a block diagram depicting an example motor control law 402 in an example system 400. The external commands (angle offset 404, angle setpoint 406, and measured angle 408) are in terms of absolute angle offset in radians. The offset becomes the new setpoint. The output variable (at block 410) is the electrical angle of the motor of a corresponding axis.

The voltages from the setpoint (sum of angle offset 404 and angle setpoint 406 added at summation block 414) and output (measured angle 408) are subtracted at summation block 416 to calculate a feed-back error 418. The resulting error 418 is used in a PID function. In a proportional branch 420 of the PID, the error is multiplied by a constant Kp to provide a long term output for the motor. If an error is largely positive or negative for a while the integral branch 424 will provide a value that will become large and push the system towards zero. When a sudden change occurs in the error value, the differential branch 422 will give a quick response. The results of all three branches (420, 422, 424) are added together in the third summation block 426. This result is filtered (e.g., via filter 428) then amplified (e.g., at block 410) to drive the motor (e.g., via a pulse with modulator 412). The overall performance of the system can be changed by adjusting the gains in the three branches (420, 422, 424) of the PID function.

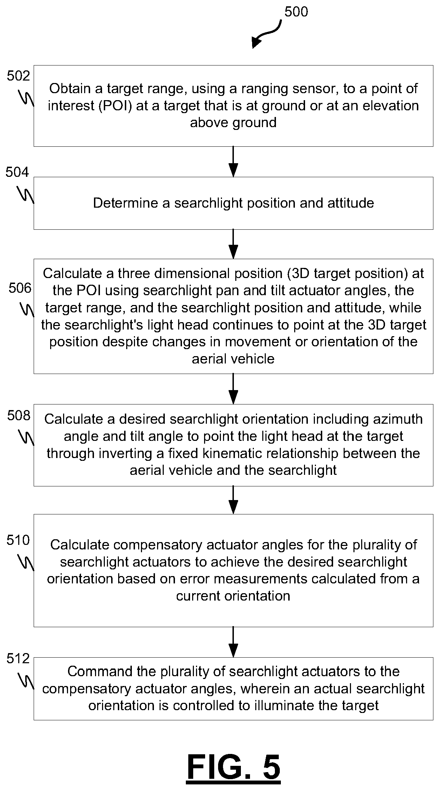

FIG. 5 is a process flow chart depicting an example process 500 for controlling an orientation of a searchlight on an aerial vehicle. The order of operation within the process 500 is not limited to the sequential execution as illustrated in the figure but may be performed in one or more varying orders as applicable and in accordance with the present disclosure.

The example process 500 includes obtaining a target range, using a ranging sensor, to a point of interest (POI) at a target that is at ground or at an elevation above ground (operation 502). In various embodiments, the POI was selected by a searchlight operator.

The example process 500 includes determining a searchlight position and attitude (operation 504). In various embodiments, determining a searchlight position and attitude comprises receiving a position and attitude for the aerial vehicle, and determining the searchlight position and attitude based on the kinematic relationship between the aerial vehicle and the searchlight.

The example process 500 includes calculating a three dimensional position (3D target position) at the POI (operation 506). The 3D target position is calculated using searchlight azimuth and tilt actuator angles, the target range, and the searchlight position and attitude, while a searchlight light head continues to point at the 3D target position despite changes in movement or orientation of the aerial vehicle

The example process 500 includes calculating a desired searchlight orientation including azimuth angle and tilt angle to point the light head at the target through inverting a kinematic relationship between the aerial vehicle and the searchlight (operation 508). In various embodiments, the azimuth angle is measured with respect to an azimuth axis and tilt axis is measured with respect to a tilt axis, and the tilt axis and the azimuth axis are non-intersecting axes. In various embodiments, calculating a desired searchlight orientation including azimuth angle and tilt angle to point the light head at the target through inverting a kinematic relationship between the aerial vehicle and the searchlight comprises calculating a desired searchlight orientation including azimuth angle and tilt angle to point the light head at the target through inverting the kinematic relationship between the aerial vehicle and the searchlight using Quaternions.

The example process 500 includes calculating compensatory actuator angles for a plurality of searchlight actuators to achieve the desired searchlight orientation based on error measurements calculated from a current orientation (operation 510). In various embodiments, calculating compensatory actuator angles for a plurality of searchlight actuators comprises calculating compensatory actuator angles to close the error measurements.

The example process 500 includes commanding the plurality of searchlight actuators to the compensatory actuator angles, wherein an actual searchlight orientation is controlled to illuminate the target (operation 512). In various embodiments, commanding the plurality of searchlight actuators to the compensatory actuator angles comprises commanding the plurality of searchlight actuators to the compensatory actuator angles using an actuator control loop that continuously commands the plurality of actuators using a control regime that closes the error measurements between current and the compensatory actuator angles.

In various embodiments, one or more types of non-transitory computer-readable signal bearing media may be used to store and distribute a program that configures one or more processors to perform a process for controlling the orientation of a searchlight on an aerial vehicle. The process for controlling the orientation of a searchlight on an aerial vehicle may include operations 502 through operation 512 described above.

Described herein are apparatus, systems, techniques and articles for target position synthesis and search light control using Inverse Kinematics. The apparatus, systems, techniques, and articles provided herein can generate target coordinates without the need of elevation from sealground level and with arbitrary positioning of the target. The apparatus, systems, techniques, and articles provided herein can work on two or more degree of freedom searchlight with non-aligned axis for each degree of freedom. The apparatus, systems, techniques, and articles provided herein can generate stabilization commands to compensate for vehicle orientation to retain the searchlight orientation with respect to earth.

In one embodiment, a searchlight system for an aerial vehicle is disclosed. The searchlight system comprises a searchlight having a light head and a plurality of searchlight actuators for adjusting an orientation of the searchlight and an electronics control unit for providing azimuth and tilt commands for the searchlight actuators. The electronics control unit comprises a controller configured to: obtain a target range, using a ranging sensor, to a point of interest (POI) at a target that is at ground or at an elevation above ground; determine a searchlight position and attitude; calculate a three dimensional position (3D target position) at the POI using searchlight azimuth and tilt actuator angles, the target range, and the searchlight position and attitude, the 3D target position being a position at which the searchlight's light head should continue to point despite changes in movement or orientation of the aerial vehicle; calculate a desired light head orientation including azimuth angle and tilt angle to point the light head at the target through inverting a kinematic relationship between the aerial vehicle and the light head; calculate compensatory actuator angles for the plurality of searchlight actuators to achieve the desired searchlight orientation based on error measurements calculated from a current orientation; and command the plurality of searchlight actuators to the compensatory actuator angles, wherein an actual light head orientation is controlled to illuminate the target.

In one embodiment, to obtain the target range to the POI, the controller is configured to select the POI selected by a searchlight operator.

In one embodiment, to determine a searchlight position and attitude the controller is configured to: receive a position and attitude from a sensor internal to the searchlight; and determine a light head position and attitude based on a kinematic relationship between the sensor and the light head.

In one embodiment, to calculate compensatory actuator angles for the plurality of searchlight actuators, the controller is configured to calculate compensatory actuator angles to close the error measurements.

In one embodiment, to command the plurality of searchlight actuators to the compensatory actuator angles, the controller is configured to command the plurality of searchlight actuators to the compensatory actuator angles using an actuator control loop that continuously commands the plurality of actuators using a control regime that closes the error measurements between current and the compensatory actuator angles.

In one embodiment, the azimuth angle is measured with respect to an azimuth axis, the tilt angle is measured with respect to a tilt axis, and the tilt axis and the azimuth axis are non-intersecting axes.

In one embodiment, to calculate a desired light head orientation including azimuth angle and tilt angle to point the light head at the target through inverting a kinematic relationship between the aerial vehicle and the light head, the controller is configured to calculate a desired light head orientation including azimuth angle and tilt angle to point the light head at the target through inverting the kinematic relationship between the aerial vehicle and the light head using Quaternions.

In another embodiment, a computer-implemented method for controlling an orientation of a searchlight on an aerial vehicle is provided. The method comprises: obtaining a target range, using a ranging sensor, to a point of interest (POI) at a target that is at ground or at an elevation above ground; determining a searchlight position and attitude; calculating a three dimensional position (3D target position) at the POI using searchlight azimuth and tilt actuator angles, the target range, and the searchlight position and attitude, the 3D target position being a position at which the searchlight's light head should continue to point despite changes in movement or orientation of the aerial vehicle; calculating a desired searchlight orientation including azimuth angle and tilt angle to point the light head at the target through inverting a kinematic relationship between the aerial vehicle and the light head; calculating compensatory actuator angles for a plurality of searchlight actuators to achieve the desired searchlight orientation based on error measurements calculated from a current orientation; and commanding the plurality of searchlight actuators to the compensatory actuator angles, wherein an actual light head orientation is controlled to illuminate the target.

In one embodiment, obtaining the target range to the POI comprises selecting the POI selected by a searchlight operator.

In one embodiment, determining a searchlight position and attitude comprises: receiving a position and attitude from a sensor internal to the searchlight and determining the light head position and attitude based on the kinematic relationship between the aerial vehicle and the light head.

In one embodiment, calculating compensatory actuator angles for a plurality of searchlight actuators comprises calculating compensatory actuator angles to close the error measurements.

In one embodiment, commanding the plurality of searchlight actuators to the compensatory actuator angles comprises commanding the plurality of searchlight actuators to the compensatory actuator angles using an actuator control loop that continuously commands the plurality of actuators using a control regime that closes the error measurements between current and the compensatory actuator angles.

In one embodiment, the azimuth angle is measured with respect to an azimuth axis, the tilt angle is measured with respect to a tilt axis, and the tilt axis and the azimuth axis are non-intersecting axes.

In one embodiment, calculating a desired searchlight orientation including azimuth angle and tilt angle to point the light head at the target through inverting a kinematic relationship between the sensor and the light head comprises calculating a desired searchlight orientation including azimuth angle and tilt angle to point the light head at the target through inverting the kinematic relationship between the sensor and the light head using Quaternions.

In another embodiment, a non-transitory computer-readable medium having stored thereon instructions which when executed by a processor cause the processor to perform a method for controlling an orientation of a searchlight on an aerial vehicle. The method comprises: obtaining a target range, using a ranging sensor, to a point of interest (POI) at a target that is at ground or at an elevation above ground; determining a searchlight position and attitude; calculating a three dimensional position (3D target position) at the POI using searchlight azimuth and tilt actuator angles, the target range, and the searchlight position and attitude, while a searchlight light head continues to point at the 3D target position despite changes in movement or orientation of the aerial vehicle; calculating a desired searchlight orientation including azimuth angle and tilt angle to point the light head at the target through inverting a kinematic relationship between the sensor and the light head; calculating compensatory actuator angles for a plurality of searchlight actuators to achieve the desired searchlight orientation based on error measurements calculated from a current orientation; and commanding the plurality of searchlight actuators to the compensatory actuator angles, wherein an actual light head orientation is controlled to illuminate the target.

In one embodiment, determining a searchlight position and attitude comprises: receiving a position and attitude from a sensor internal to the searchlight or from external equipment on the aerial vehicle and determining the light head position and attitude based on the kinematic relationship between the sensor and the light head.

In one embodiment, calculating compensatory actuator angles for the plurality of searchlight actuators comprises calculating compensatory actuator angles to close the error measurements.

In one embodiment, commanding the plurality of searchlight actuators to the compensatory actuator angles comprises commanding the plurality of searchlight actuators to the compensatory actuator angles using an actuator control loop that continuously commands the plurality of actuators using a control regime that closes the error measurements between current and the compensatory actuator angles.

In one embodiment, the azimuth angle is measured with respect to an azimuth axis, the tilt angle is measured with respect to a tilt axis, and the tilt axis and the azimuth axis are non-intersecting axes.

In one embodiment, calculating a desired light head orientation including azimuth angle and tilt angle to point the light head at the target through inverting a kinematic relationship between the sensor and the light head comprises calculating a desired light head orientation including azimuth angle and tilt angle to point the light head at the target through inverting the kinematic relationship between the sensor and the light head using Quaternions.

In another embodiment, a searchlight system on an aerial vehicle is provided. The searchlight system comprises a searchlight having a light head and a plurality of searchlight actuators for adjusting an orientation of the searchlight and an electronics control unit for providing azimuth and tilt commands for the searchlight actuators. The electronics control unit comprises a controller configured to: select a point of interest (POI) selected by a searchlight operator that is at ground or at an elevation above ground at which a target is located; obtain a target range to the POI using a ranging sensor that provides the searchlight system with an exact distance of the target from the light head of the searchlight; receive a position and attitude from a sensor internal to the searchlight or from external equipment on the aerial vehicle, wherein a light head position and attitude can be determined based on a kinematic relationship between the sensor and the light head; calculate a three dimensional position of the target (3D target position) using the aerial vehicle's position, the aerial vehicle's attitude, searchlight azimuth and tilt actuator angles and the target range, wherein the Searchlight's Light Head continues to point at the 3D target position despite changes in movement or orientation of the aerial vehicle; calculate a desired light head orientation including azimuth and tilt to point the light head at the target through inverting a kinematic relationship between the sensor and the light head; calculate compensatory actuator angles for the plurality of actuators to achieve the desired light head orientation based on error measurements calculated from a current orientation, wherein the compensatory actuator angles are calculated to close the error measurements; and command the plurality of actuators to the compensatory actuator angles using a actuator control loop that continuously commands the plurality of actuators using a control regime that closes the error measurements between current and the compensatory actuator angles using an actuator control law selected to match bandwidth and performance characteristics of the system, wherein an actual searchlight orientation is controlled to illuminate the target.

Those of skill in the art will appreciate that the various illustrative logical blocks, modules, circuits, and algorithm steps described in connection with the embodiments disclosed herein may be implemented as electronic hardware, computer software, or combinations of both. Some of the embodiments and implementations are described above in terms of functional and/or logical block components (or modules) and various processing steps. However, it should be appreciated that such block components (or modules) may be realized by any number of hardware, software, and/or firmware components configured to perform the specified functions. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present invention. For example, an embodiment of a system or a component may employ various integrated circuit components, e.g., memory elements, digital signal processing elements, logic elements, look-up tables, or the like, which may carry out a variety of functions under the control of one or more microprocessors or other control devices. In addition, those skilled in the art will appreciate that embodiments described herein are merely exemplary implementations.

The various illustrative logical blocks, modules, and circuits described in connection with the embodiments disclosed herein may be implemented or performed with a general purpose processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general-purpose processor may be a microprocessor, but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

The steps of a method or algorithm described in connection with the embodiments disclosed herein may be embodied directly in hardware, in software executed by a processor, or in a combination of the two. A software may reside in RAM memory, flash memory, ROM memory, EPROM memory, EEPROM memory, registers, hard disk, a removable disk, a CD-ROM, or any other form of storage medium known in the art. An exemplary storage medium is coupled to the processor such that the processor can read information from, and write information to, the storage medium. In the alternative, the storage medium may be integral to the processor. The processor and the storage medium may reside in an ASIC. The ASIC may reside in a user terminal. In the alternative, the processor and the storage medium may reside as discrete components in a user terminal.

In this document, relational terms such as first and second, and the like may be used solely to distinguish one entity or action from another entity or action without necessarily requiring or implying any actual such relationship or order between such entities or actions. Numerical ordinals such as "first," "second," "third," etc. simply denote different singles of a plurality and do not imply any order or sequence unless specifically defined by the claim language. The sequence of the text in any of the claims does not imply that process steps must be performed in a temporal or logical order according to such sequence unless it is specifically defined by the language of the claim. The process steps may be interchanged in any order without departing from the scope of the invention as long as such an interchange does not contradict the claim language and is not logically nonsensical.

Furthermore, depending on the context, words such as "connect" or "coupled to" used in describing a relationship between different elements do not imply that a direct physical connection must be made between these elements. For example, two elements may be connected to each other physically, electronically, logically, or in any other manner, through one or more additional elements.

While at least one exemplary embodiment has been presented in the foregoing detailed description of the invention, it should be appreciated that a vast number of variations exist. It should also be appreciated that the exemplary embodiment or exemplary embodiments are only examples, and are not intended to limit the scope, applicability, or configuration of the invention in any way. Rather, the foregoing detailed description will provide those skilled in the art with a convenient road map for implementing an exemplary embodiment of the invention. It being understood that various changes may be made in the function and arrangement of elements described in an exemplary embodiment without departing from the scope of the invention as set forth in the appended claims.

## Claims

1. A searchlight system for an aerial vehicle, the searchlight system comprising:

   a searchlight (130) having a light head (202) and a plurality of searchlight actuators (132) for adjusting an orientation of the light head; and
   an electronics control unit for providing azimuth and tilt commands for the searchlight actuators, the electronics control unit comprising a controller configured to:

> obtain (304, 502) a target range, using a ranging sensor (136), to a point of interest, POI, at a target that is at ground or at an elevation above ground;
> determine (306, 504) a searchlight position and attitude;
> calculate (308, 506) a three dimensional position, 3D target position, at the POI using searchlight azimuth and tilt actuator angles, the target range, and the searchlight position and attitude, the 3D target position being a position at which the searchlight's light head should continue to point despite changes in movement or orientation of the aerial vehicle;
> calculate (310, 508) a desired light head orientation including azimuth angle and tilt angle to point the light head at the target through inverting a kinematic relationship between the aerial vehicle and the light head;
> calculate (510) compensatory actuator angles for the plurality of searchlight actuators to achieve the desired searchlight orientation based on error measurements calculated from a current orientation; and
> command (318, 512) the plurality of searchlight actuators to the compensatory actuator angles, wherein an actual light head orientation is controlled to illuminate the target.

2. The searchlight system of claim 1, wherein to determine a searchlight position and attitude the controller is configured to:

> receive a position and attitude from a sensor (134) internal to the searchlight; and
> determine a light head position and attitude based on a kinematic relationship between the sensor (134) and the light head.

3. The searchlight system of claim 1, wherein to calculate compensatory actuator angles for the plurality of searchlight actuators, the controller is configured to calculate compensatory actuator angles to close the error measurements.

4. The searchlight system of claim 1, wherein to command the plurality of searchlight actuators to the compensatory actuator angles, the controller is configured to command the plurality of searchlight actuators to the compensatory actuator angles using an actuator control loop that continuously commands the plurality of actuators using a control regime that closes the error measurements between current and the compensatory actuator angles.

5. The searchlight system of claim 1, wherein the azimuth angle is measured with respect to an azimuth axis and tilt angle is measured with respect to a tilt axis, and wherein the tilt axis and the azimuth axis are non-intersecting axes.

6. The searchlight system of claim 1, wherein to calculate a desired light head orientation including azimuth angle and tilt angle to point the light head at the target through inverting a kinematic relationship between the aerial vehicle and the light head, the controller is configured to calculate a desired light head orientation including azimuth angle and tilt angle to point the light head at the target through inverting the kinematic relationship between the aerial vehicle and the light head using Quaternions.

7. A computer-implemented method for controlling an orientation of a searchlight for an aerial vehicle, the method comprising:

> obtaining (403, 502) a target range, using a ranging sensor (136), to a point of interest (POI) at a target that is at ground or at an elevation above ground;
> determining (306, 504) a searchlight position and attitude;
> calculating (308, 506) a three dimensional position, 3D target position, at the POI using searchlight azimuth and tilt actuator angles, the target range, and the searchlight position and attitude, the 3D target position being a position at which a searchlight light head should continue to point despite changes in movement or orientation of the aerial vehicle;
> calculating (310, 508) a desired searchlight orientation including azimuth angle and tilt angle to point the light head at the target through inverting a kinematic relationship between the aerial vehicle and the light head;
> calculating (510) compensatory actuator angles for a plurality of searchlight actuators to achieve the desired searchlight orientation based on error measurements calculated from a current orientation; and
> commanding (318, 512) the plurality of searchlight actuators to the compensatory actuator angles, wherein an actual light head orientation is controlled to illuminate the target.

8. The method of claim 7, wherein determining a searchlight position and attitude comprises:

> receiving a position and attitude from a sensor (134) internal to the searchlight; and
> determining the light head position and attitude based on the kinematic relationship between the sensor (134) and the light head.

9. The method of claim 7, wherein calculating compensatory actuator angles for the plurality of searchlight actuators comprises calculating compensatory actuator angles to close the error measurements.

10. The method of claim 7, wherein commanding the plurality of searchlight actuators to the compensatory actuator angles comprises commanding the plurality of searchlight actuators to the compensatory actuator angles using an actuator control loop that continuously commands the plurality of actuators using a control regime that closes the error measurements between current and the compensatory actuator angles.

11. The method of claim 7, wherein the azimuth angle is measured with respect to an azimuth axis and tilt angle is measured with respect to a tilt axis, and wherein the tilt axis and the azimuth axis are non-intersecting axes.

12. The method of claim 7, wherein calculating a desired light head orientation including azimuth angle and tilt angle to point the light head at the target through inverting a kinematic relationship between the aerial vehicle and the light head comprises calculating a desired light head orientation including azimuth angle and tilt angle to point the light head at the target through inverting the kinematic relationship between the aerial vehicle and the light head using Quaternions.

**Patentansprüche**

1. Suchlichtsystem für ein Luftfahrzeug, das Suchlichtsystem umfassend:

   ein Suchlicht (130), das einen Lichtkopf (202) und eine Vielzahl von Suchlichtaktuatoren (132) zum Einstellen einer Ausrichtung des Lichtkopfes aufweist; und
   eine elektronische Steuerungseinheit zum Bereitstellen von Azimuth- und Neigungsanweisungen für die Suchlichtaktuatoren, wobei die elektronische Steuerungseinheit eine Steuerung umfasst, die dazu konfiguriert ist:

   unter Verwendung eines Entfernungssensors (136) eine Zielentfernung zu einem Punkt von Interesse, POI, an einem Ziel, das ein Boden oder eine Erhöhung über dem Boden ist, zu erhalten (304, 502);
   eine Suchlichtposition und -stellung zu bestimmen (306, 504);

   eine dreidimensionale Position, 3D-Zielposition, an dem POI unter Verwendung von Suchlicht-Azimuth- und Neigungsakutorwinkeln, der Zielentfernung und der Suchlichtposition und -stellung zu berechnen (308, 506), wobei die 3D-Zielposition eine Position ist, auf die der Lichtkopf des Suchlichts trotz Änderungen von Bewegung oder Ausrichtung des Luftfahrzeugs weiterhin gerichtet sein sollte;
   eine gewünschte Lichtkopfausrichtung, die einen Azimuthwinkel und einen Neigungswinkel beinhaltet, zu berechnen (310, 508), um den Lichtkopf durch Umkehren einer kinematischen Beziehung zwischen dem Luftfahrzeug und dem Lichtkopf auf das Ziel zu richten;
   kompensatorische Aktuatorwinkel für die Vielzahl von Suchlichtaktuatoren zu berechnen (510), um die gewünschte Suchlichtausrichtung basierend auf Fehlermessungen, die aus einer aktuellen Ausrichtung berechnet sind, zu erreichen; und
   die Vielzahl von Suchlichtaktuatoren den kompensatorischen Aktuatorwinkeln zuzuweisen (318, 512), wobei eine tatsächliche Lichtkopfausrichtung dazu gesteuert ist, das Ziel zu beleuchten.

2. Suchlichtsystem nach Anspruch 1, wobei zum Bestimmen einer Suchlichtposition und - stellung die Steuerung ferner dazu konfiguriert ist:

   eine Position und Stellung von einem Sensor (134) innerhalb des Suchlichts zu empfangen; und
   eine Lichtkopfposition und -stellung basierend auf einer kinematischen Beziehung zwischen dem Sensor (134) und dem Lichtkopf zu bestimmen.

3. Suchlichtsystem nach Anspruch 1, wobei zum Berechnen von kompensatorischen Aktuatorwinkeln für die Vielzahl von Suchlichtaktuatoren die Steuerung dazu konfiguriert ist, kompensatorische Aktuatorwinkel zu berechnen, um die Fehlermessungen auszugleichen.

4. Suchlichtsystem nach Anspruch 1, wobei zum Zuweisen der Vielzahl von Suchlichtaktuatoren zu den kompensatorischen Aktuatorwinkeln die Steuerung dazu konfiguriert ist, die Vielzahl von Suchlichtaktuatoren zu den kompensatorischen Aktuatorwinkeln unter Verwendung einer Aktuatorsteuerungsschleife zuzuweisen, die kontinuierlich die Vielzahl von Aktuatoren unter Verwendung eines Steuerungsregimes zuweist, das die Fehlermessungen zwischen aktuellen und den kompensatorischen Aktuatorwinkeln ausgleicht.

**5.** Suchlichtsystem nach Anspruch 1, wobei der Azimuthwinkel gemessen wird in Bezug auf eine Azimuthachse und der Neigungswinkel gemessen wird in Bezug auf eine Neigungsachse, und wobei die Neigungsachse und die Azimuthachse nicht schneidende Achsen sind.

**6.** Suchlichtsystem nach Anspruch 1, wobei zum Berechnen einer gewünschten Lichtkopfausrichtung, die einen Azimuthwinkel und einen Neigungswinkel beinhaltet, um den Lichtkopf durch Umkehren einer kinematischen Beziehung zwischen dem Luftfahrzeug und dem Lichtkopf auf das Ziel zu richten, die Steuerung dazu konfiguriert ist, unter Verwendung von Quaternionen eine gewünschte Lichtkopfausrichtung zu berechnen, die einen Azimuthwinkel und einen Neigungswinkel beinhaltet, um den Lichtkopf durch Umkehren einer kinematischen Beziehung zwischen dem Luftfahrzeug und dem Lichtkopf auf das Ziel zu richten.

**7.** Computerimplementiertes Verfahren zum Steuern einer Ausrichtung eines Suchlichts für ein Luftfahrzeug, das Verfahren umfassend:

Erhalten (403, 502), unter Verwendung eines Entfernungssensors (136), einer Zielentfernung zu einem Punkt von Interesse (POI) an einem Ziel, das am Boden oder an einer Erhöhung über dem Boden ist;
Bestimmen (306, 504) einer Suchlichtposition und -stellung;
Berechnen (308, 506) einer dreidimensionalen Position, 3D-Zielposition, an dem POI unter Verwendung von Suchlicht-Azimuth- und Neigungsakutaorwinkeln, der Zielentfernung und der Suchlichtposition und -stellung, wobei die 3D-Zielposition eine Position ist, auf die ein Suchlichtlichtkopf trotz Änderungen von Bewegung oder Ausrichtung des Luftfahrzeugs weiterhin gerichtet sein sollte;
Berechnen (310, 508) einer gewünschten Suchlichtausrichtung, die einen Azimuthwinkel und einen Neigungswinkel beinhaltet, um den Lichtkopf durch Umkehren einer kinematischen Beziehung zwischen dem Luftfahrzeug und dem Lichtkopf auf das Ziel zu richten;
Berechnen (510) von kompensatorischen Aktuatorwinkeln für die Vielzahl von Suchlichtaktuatoren, um die gewünschte Suchlichtausrichtung basierend auf Fehlermessungen, die aus einer aktuellen Ausrichtung berechnet sind, zu erreichen; und
Zuweisen (318, 512) der Vielzahl von Suchlichtaktuatoren zu den kompensatorischen Aktuatorwinkeln, wobei eine tatsächliche Lichtkopfausrichtung dazu gesteuert ist, das Ziel zu beleuchten.

**8.** Verfahren nach Anspruch 7, wobei das Bestimmen einer Suchlichtposition und -stellung Folgendes umfasst:

Empfangen einer Position und Stellung von einem Sensor (134) innerhalb des Suchlichts; und
Bestimmen der Lichtkopfposition und -stellung basierend auf der kinematischen Beziehung zwischen dem Sensor (134) und dem Lichtkopf.

**9.** Verfahren nach Anspruch 7, wobei das Berechnen von kompensatorischen Aktuatorwinkeln für die Vielzahl von Suchlichtaktuatoren das Berechnen von kompensatorischen Aktuatorwinkeln umfasst, um die Fehlermessungen auszugleichen.

**10.** Verfahren nach Anspruch 7, wobei das Zuweisen der Vielzahl von Suchlichtaktuatoren zu den kompensatorischen Aktuatorwinkeln das Zuweisen der Vielzahl von Suchlichtaktuatoren zu den kompensatorischen Aktuatorwinkeln unter Verwendung einer Aktuatorsteuerungsschleife umfasst, die kontinuierlich die Vielzahl von Aktuatoren unter Verwendung eines Steuerungsregimes zuweist, das die Fehlermessungen zwischen aktuellen und den kompensatorischen Aktuatorwinkeln ausgleicht.

**11.** Verfahren nach Anspruch 7, wobei der Azimuthwinkel gemessen wird in Bezug auf eine Azimuthachse und der Neigungswinkel gemessen wird in Bezug auf eine Neigungsachse, und wobei die Neigungsachse und die Azimuthachse nicht schneidende Achsen sind.

**12.** Verfahren nach Anspruch 7, wobei das Berechnen einer gewünschten Lichtkopfausrichtung, die einen Azimuthwinkel und einen Neigungswinkel beinhaltet, um den Lichtkopf durch Umkehren einer kinematischen Beziehung zwischen dem Luftfahrzeug und dem Lichtkopf auf das Ziel zu richten, das Berechnen, unter Verwendung von Quaternionen, einer gewünschten Lichtkopfausrichtung umfasst, die einen Azimuthwinkel und einen Neigungswinkel beinhaltet, um den Lichtkopf durch Umkehren einer kinematischen Beziehung zwischen dem Luftfahrzeug und dem Lichtkopf auf das Ziel zu richten.

**Revendications**

**1.** Système de projecteur pour un véhicule aérien, le système de projecteur comprenant :

un projecteur (130) ayant une tête d'éclairage (202) et une pluralité d'actionneurs de projecteur (132) pour régler une orientation de la tête d'éclairage ; et

une unité de commande électronique pour fournir des commandes d'azimut et d'inclinaison pour les actionneurs de projecteur, l'unité de commande électronique comprenant un contrôleur configuré pour :

obtenir (304, 502) une portée cible, en utilisant un capteur de télémétrie (136), jusqu'à un point d'intérêt, POI, au niveau d'une cible qui est au sol ou à une altitude au-dessus du sol ;

déterminer (306, 504) une position et attitude de projecteur ;

calculer (308, 506) une position tridimensionnelle, la position cible 3D, au niveau du POI en utilisant les angles d'azimut et d'inclinaison d'actionneur de projecteur, la portée cible et la position et attitude du projecteur, la position cible 3D étant une position au niveau de laquelle la tête d'éclairage du projecteur devrait continuer de pointer en dépit de changements de mouvement ou d'orientation du véhicule aérien ;

calculer (310, 508) une orientation de tête d'éclairage souhaitée incluant l'angle d'azimut et l'angle d'inclinaison pour pointer la tête d'éclairage au niveau de la cible en inversant une relation cinématique entre le véhicule aérien et la tête d'éclairage ;

calculer (510) les angles d'actionneur compensatoires pour la pluralité d'actionneurs de projecteur pour obtenir l'orientation de projecteur souhaitée sur la base de mesures d'erreur calculées à partir d'une orientation actuelle ; et

commander (318, 512) la pluralité d'actionneurs de projecteur aux angles d'actionneur compensatoires, dans lequel une orientation réelle de tête d'éclairage est contrôlée pour éclairer la cible.

2. Système de projecteur selon la revendication 1, dans lequel, pour déterminer une position et attitude du projecteur, le contrôleur est configuré pour :

recevoir une position et attitude à partir d'un capteur (134) interne au projecteur ; et

déterminer une position et attitude de tête d'éclairage sur la base d'une relation cinématique entre le capteur (134) et la tête d'éclairage.

3. Système de projecteur selon la revendication 1, dans lequel, pour calculer des angles d'actionneur compensatoires pour la pluralité d'actionneurs de projecteur, le contrôleur est configuré pour calculer des angles d'actionneur compensatoires pour fermer les mesures d'erreur.

4. Système de projecteur selon la revendication 1, dans lequel, pour commander la pluralité d'actionneurs de projecteur aux angles d'actionneur compensatoires, le contrôleur est configuré pour commander la pluralité d'actionneurs de projecteur aux angles d'actionneur compensatoires en utilisant une boucle de contrôle d'actionneur qui commande en continu la pluralité d'actionneurs en utilisant un régime de contrôle qui ferme les mesures d'erreur entre les angles d'actionneur courants et compensatoires.

5. Système de projecteur selon la revendication 1, dans lequel l'angle d'azimut est mesuré par rapport à un axe d'azimut et l'angle d'inclinaison est mesuré par rapport à un axe d'inclinaison, et dans lequel l'axe d'inclinaison et l'axe d'azimut sont des axes non sécants.

6. Système de projecteur selon la revendication 1, dans lequel, pour calculer une orientation de tête d'éclairage souhaitée incluant un angle d'azimut et un angle d'inclinaison pour pointer la tête d'éclairage au niveau de la cible en inversant une relation cinématique entre le véhicule aérien et la tête d'éclairage, le contrôleur est configuré pour calculer une orientation de tête d'éclairage souhaitée incluant un angle d'azimut et un angle d'inclinaison pour pointer la tête d'éclairage au niveau de la cible en inversant la relation cinématique entre le véhicule aérien et la tête d'éclairage en utilisant des quaternions.

7. Procédé mis en œuvre par ordinateur pour contrôler une orientation d'un projecteur pour un véhicule aérien, le procédé comprenant :

l'obtention (403, 502) d'une portée cible, en utilisant un capteur de télémétrie (136), jusqu'à un point d'intérêt (POI) au niveau d'une cible qui est au sol ou à une altitude au-dessus du sol ;

la détermination (306, 504) d'une position et attitude de projecteur ;

le calcul (308, 506) d'une position tridimensionnelle, la position cible 3D, au niveau du POI en utilisant les angles d'azimut et d'inclinaison d'actionneur de projecteur, la portée cible et la position et attitude du projecteur, la position cible 3D étant une position au niveau de laquelle la tête d'éclairage de projecteur devrait continuer de pointer en dépit de changements de mouvement ou d'orientation du véhicule aérien ;

le calcul (310, 508) d'une orientation de projecteur souhaitée incluant l'angle d'azimut et l'angle d'inclinaison pour pointer la tête d'éclairage au niveau de la cible en inversant une relation cinématique entre le véhicule aérien et la tête d'éclairage ;

le calcul (510) d'angles d'actionneur compensatoires pour une pluralité d'actionneurs de projecteur pour obtenir l'orientation de projecteur souhaitée sur la base de mesures d'erreur calculées à partir d'une orientation actuelle ; et

la commande (318, 512) de la pluralité d'actionneurs de projecteur aux angles d'actionneur compensatoires, dans lequel une orientation réelle de tête d'éclairage est contrôlée pour éclairer la cible.

8. Procédé selon la revendication 7, dans lequel la détermination d'une position et attitude de projecteur comprend :

    la réception d'une position et attitude à partir d'un capteur (134) interne au projecteur ; et

    la détermination de la position et attitude de tête d'éclairage sur la base de la relation cinématique entre le capteur (134) et la tête d'éclairage.

9. Procédé selon la revendication 7, dans lequel le calcul d'angles d'actionneur compensatoires pour la pluralité d'actionneurs de projecteur comprend le calcul d'angles d'actionneur compensatoires pour fermer les mesures d'erreur.

10. Procédé selon la revendication 7, dans lequel la commande de la pluralité d'actionneurs de projecteur aux angles d'actionneur compensatoires comprend la commande de la pluralité d'actionneurs de projecteur aux angles d'actionneur compensatoires en utilisant une boucle de contrôle d'actionneur qui commande en continu la pluralité d'actionneurs en utilisant un régime de commande qui ferme les mesures d'erreur entre les angles d'actionneur courants et compensatoires.

11. Procédé selon la revendication 7, dans lequel l'angle d'azimut est mesuré par rapport à un axe d'azimut et l'angle d'inclinaison est mesuré par rapport à un axe d'inclinaison, et dans lequel l'axe d'inclinaison et l'axe d'azimut sont des axes non sécants.

12. Procédé selon la revendication 7, dans lequel le calcul d'une orientation de tête d'éclairage souhaitée incluant un angle d'azimut et un angle d'inclinaison pour pointer la tête d'éclairage au niveau de la cible en inversant une relation cinématique entre le véhicule aérien et la tête d'éclairage comprend le calcul d'une orientation de tête d'éclairage souhaitée incluant un angle d'azimut et un angle d' inclinaison pour pointer la tête d'éclairage au niveau de la cible en inversant la relation cinématique entre le véhicule aérien et la tête d'éclairage en utilisant des quaternions.

**FIG. 1**

FIG. 2C

FIG. 2B

FIG. 2A

FIG. 2E

FIG. 2D

300

**Start**

302 Select a target location

304 Obtain Range to the Target

306 Obtain searchlight position and attitude

308 Calculate Target Position

310 Calculate Required Searchlight Orientation using inverse kinematics

312 Is current orientation different than required Orientation?  N

Y

314 Calculate Required Motor Angles using Kinematic relation

316 Is current Motor Angle Different than required?  N

Y

318 Command Motors to Required Angle

# FIG. 3

**FIG. 4**

500

502
Obtain a target range, using a ranging sensor, to a point of interest (POI) at a target that is at ground or at an elevation above ground

504
Determine a searchlight position and attitude

506
Calculate a three dimensional position (3D target position) at the POI using searchlight pan and tilt actuator angles, the target range, and the searchlight position and attitude, while the searchlight's light head continues to point at the 3D target position despite changes in movement or orientation of the aerial vehicle

508
Calculate a desired searchlight orientation including azimuth angle and tilt angle to point the light head at the target through inverting a fixed kinematic relationship between the aerial vehicle and the searchlight

510
Calculate compensatory actuator angles for the plurality of searchlight actuators to achieve the desired searchlight orientation based on error measurements calculated from a current orientation

512
Command the plurality of searchlight actuators to the compensatory actuator angles, wherein an actual searchlight orientation is controlled to illuminate the target

## FIG. 5

**EP 4 230 531 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- IN 202211009303

- US 20150003084 A1